(19) Europäisches Patentamt
European Patent Office
Office européen des brevets

(11) **EP 4 773 265 A1**

(12) **EUROPEAN PATENT APPLICATION**

(43) Date of publication:
**08.07.2026  Bulletin 2026/28**

(21) Application number: **25216610.3**

(22) Date of filing: **18.11.2025**

(51) International Patent Classification (IPC):
**H01M 8/04291** (2016.01)    **B60K 13/04** (2006.01)
**H01M 8/04119** (2016.01)    **B60L 50/72** (2019.01)

(52) Cooperative Patent Classification (CPC):
**H01M 8/04291; B60K 13/04; B60L 50/72;**
**F01N 13/082;** F01N 2590/08; H01M 2250/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **03.01.2025  SE 2550002**

(71) Applicant: **Volvo Truck Corporation**
**405 08 Göteborg (SE)**

(72) Inventors:
• **LÖWSTEDT, Carl
ONSALA (SE)**
• **TULASIGERI, Vishal
DHARWAD (IN)**

(74) Representative: **Ström & Gulliksson AB**
**P.O. Box 4188**
**203 13 Malmö (SE)**

(54) **FUEL CELL EXHAUST FLUID DRAIN REDUCTION**

(57)    An exhaust fluid drain reducer (110) for an exhaust system (100) arranged downstream a fuel cell system (20), wherein the exhaust fluid drain reducer (110) comprises: an exhaust fluid inlet (112) arranged in fluid communication with main exhaust piping (102) of the exhaust system (100), the main exhaust piping (102) fluidly connecting a fuel cell stack (27) of the fuel cell system (20) and a fluid exhaust chimney (130); an exhaust fluid outlet (114) arranged in fluid communication with a fluid discharge location; and an exhaust fluid conduit (116) fluidly connecting the exhaust fluid inlet (112) and the exhaust fluid outlet (114), wherein the exhaust fluid conduit (116) is constructed with an inner diameter smaller than that of the main exhaust piping (102).

*FIG. 7*

EP 4 773 265 A1

**Description**

**TECHNICAL FIELD**

The disclosure relates generally to a fuel cell technology. In particular aspects, the disclosure relates to fuel cell exhaust fluid drain reduction. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

In contemporary fuel cell systems, the conversion of hydrogen into electricity generates significant amounts of exhaust fluids, including both water vapour and gases, that need to be managed. The present disclosure suggests improvements on how to manage these fuel cell exhaust fluids.

**SUMMARY**

It is desirable to expel fuel cell exhaust fluids through relatively high vertical locations from a ground surface, such as an exhaust fluid chimney, rather than directly onto roads. This approach reduces the risk of water freezing on road surfaces, which can create hazardous driving conditions. Moreover, by expelling the fluids as high up as possible, particles will react to a greater extent with air, enhancing dispersion and reducing the concentration of pollutants.

However, expelling exhaust fluids at such a vertical height introduces challenges related to backpressure and inefficient water drainage. High backpressure can impede the smooth flow of fluids, potentially causing exhaust fluids to travel back toward the fuel cell stack. This backflow can damage critical components, such as membranes, leading to reduced performance or system failure.

It shall be noted that, while higher vertical expulsion of fluids is typically desirable, in some cases the fluids may be dispersed through a fluid exhaust chimney at other heights as well. For example, fluids may be expelled at intermediate or lower levels, depending on specific operational or environmental considerations.

In a first aspect of this disclosure there is provided an exhaust fluid drain reducer for an exhaust system arranged downstream of a fuel cell system, wherein the exhaust fluid drain reducer comprises an exhaust fluid inlet arranged in fluid communication with main exhaust piping of the exhaust system, the main exhaust piping fluidly connecting a fuel cell stack of the fuel cell system and a fluid exhaust chimney; an exhaust fluid outlet arranged in fluid communication with a fluid discharge location; and an exhaust fluid conduit fluidly connecting the exhaust fluid inlet and the exhaust fluid outlet, wherein the exhaust fluid conduit is constructed with an inner diameter smaller than that of the main exhaust piping.

The first aspect of the disclosure may seek to prevent backpressure and inefficient drainage in fuel cell systems. A technical benefit may include improving drainage and reducing backflow.

Optionally in some examples, including in at least one preferred example, the exhaust fluid drain reducer is arranged at a lower main exhaust piping portion. A technical benefit may include improved fluid capture and drainage efficiency due to gravity assistance.

Optionally in some examples, including in at least one preferred example, the lower main exhaust piping portion includes a lowest vertical position of the main exhaust piping, the exhaust fluid inlet being arranged at a predetermined distance from said lowest vertical position. A technical benefit may include improved fluid collection, reducing the risk of backflow.

Optionally in some examples, including in at least one preferred example, the predetermined distance is less than 5% of the total length of the main exhaust piping. A technical benefit may include enhanced fluid removal efficiency by reducing accumulation.

Optionally in some examples, including in at least one preferred example, a longitudinal axis of the main exhaust piping and the exhaust fluid drain reducer form a T-junction at the exhaust fluid inlet. A technical benefit may include effective diversion of fluids without disrupting the main flow.

Optionally in some examples, including in at least one preferred example, the exhaust fluid inlet comprises a lateral extension inside the main exhaust piping. A technical benefit may include increased fluid capture by directing flow into the reducer.

Optionally in some examples, including in at least one preferred example, the lateral extension is tilted by a tilt angle towards the longitudinal axis of the main exhaust piping. A technical benefit may include reduced turbulence and enhanced fluid directionality.

Optionally in some examples, including in at least one preferred example, the tilt angle is at least 160 degrees, more preferably 170 degrees, most preferably between 176 and 177 degrees. A technical benefit may include near-parallel alignment with the flow, improving capture efficiency.

Optionally in some examples, including in at least one preferred example, the lateral extension comprises an upper beveled edge. A technical benefit may include smoother fluid transition, reducing turbulence.

Optionally in some examples, including in at least one preferred example, the lateral extension comprises a lower grooved edge. A technical benefit may include improved fluid guidance and flow control.

Optionally in some examples, including in at least one preferred example, the lower grooved edge forms a cavity between the lateral extension and an inner surface of the main exhaust piping. A technical benefit may include enhanced fluid collection and direction.

Optionally in some examples, including in at least one preferred example, further comprising a connector framework comprising a first connector element affixed to a first main exhaust piping portion; a second connector element affixed to a second main exhaust piping portion; and an opening portion protruding downwards in relation to a longitudinal axis of the main exhaust piping, wherein the exhaust fluid inlet is received at the opening portion. A technical benefit may include secure connection and alignment of piping components.

Optionally in some examples, including in at least one preferred example, the connector framework is made of a material comprising silicone. A technical benefit may include increased flexibility and heat resistance.

Optionally in some examples, including in at least one preferred example, a portion of the main exhaust piping preceding and/or succeeding the arrangement of the exhaust fluid inlet in a flow direction of the exhaust system is constructed with an inner diameter smaller than that of other portions of the main exhaust piping. A technical benefit may include increased flow speed and pressure differential.

Optionally in some examples, including in at least one preferred example, the fluid discharge location is arranged vertically below the exhaust fluid drain reducer. A technical benefit may include gravity-assisted drainage, reducing fluid retention.

Optionally in some examples, including in at least one preferred example, the fluid discharge location is an exhaust fluid reservoir. A technical benefit may include temporary storage of fluids for controlled release.

Optionally in some examples, including in at least one preferred example, the exhaust fluid reservoir comprises an overflow valve enabling atmospheric ventilation for the exhaust fluid drain reducer. A technical benefit may include pressure regulation.

Optionally in some examples, including in at least one preferred example, the fluid discharge location is an external environment. A technical benefit may include direct expulsion of exhaust fluids, simplifying system design.

Optionally in some examples, including in at least one preferred example, the exhaust fluid outlet connects to a second conduit via which the exhaust fluid drain reducer connects to said fluid discharge location. A technical benefit may include flexible routing of exhaust fluids to various discharge points.

Optionally in some examples, including in at least one preferred example, the exhaust fluid conduit is constructed with an inner diameter being at least five times shorter than that of the main exhaust piping. A technical benefit may include optimized pressure dynamics for efficient fluid expulsion.

Optionally in some examples, including in at least one preferred example, comprising piping. A technical benefit may include structural support and guidance for fluid flow.

In a second aspect of this disclosure there is provided a fuel cell electric vehicle, comprising a fuel cell system and an exhaust system arranged downstream the fuel cell system and comprising the exhaust fluid drain reducer of the first aspect.

The second aspect of the disclosure may seek to prevent backpressure and inefficient drainage in fuel cell systems. A technical benefit may include improving drainage and reducing backflow.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

## BRIEF DESCRIPTION OF THE DRAWINGS

Examples are described in more detail below with reference to the appended drawings.

FIG. 1 is an exemplary schematic illustration of a fuel cell electric vehicle according to an example.

FIG. 2 is an exemplary schematic illustration of a fuel cell system and an exhaust system according to an example.

FIG. 3 is an exemplary schematic illustration of a drain reducer arranged in an exhaust system for two fuel cell systems according to an example.

FIG. 4 is an exemplary schematic illustration of a drain reducer arranged in an exhaust system according to an example.

FIG. 5 is an exemplary schematic illustration of a drain reducer arranged in an exhaust system according to an example.

**FIG. 6** is an exemplary schematic illustration of a drain reducer arranged in an exhaust system according to an example.

**FIG. 7** is an exemplary schematic illustration of a drain reducer arranged in an exhaust system according to an example.

**DETAILED DESCRIPTION**

The detailed description set forth below provides information and examples of the disclosed technology with sufficient detail to enable those skilled in the art to practice the disclosure.

The present disclosure addresses the need to expel fuel cell exhaust fluids through a fluid exhaust chimney, typically associated with higher vertical positions, to reduce the risk of water freezing on roads and enhance pollutant dispersion. To counter issues relating to backflow, the exhaust fluid drain reducer is designed to manage fluid flow efficiently. It connects an exhaust fluid inlet to the main exhaust piping, linking the fuel cell stack to the chimney. By using a conduit with a smaller inner diameter than the main exhaust piping, a pressure difference can be established, facilitating fluid movement towards the chimney. This design can ensure effective drainage and reduced backpressure, protecting the fuel cell stack from damage and enhancing system safety and performance. The facilitated fluid movement is applicable also for fluid exhaust chimneys not necessarily located at a high vertical position, as the increased fluid movement may be beneficial for directional flow in general.

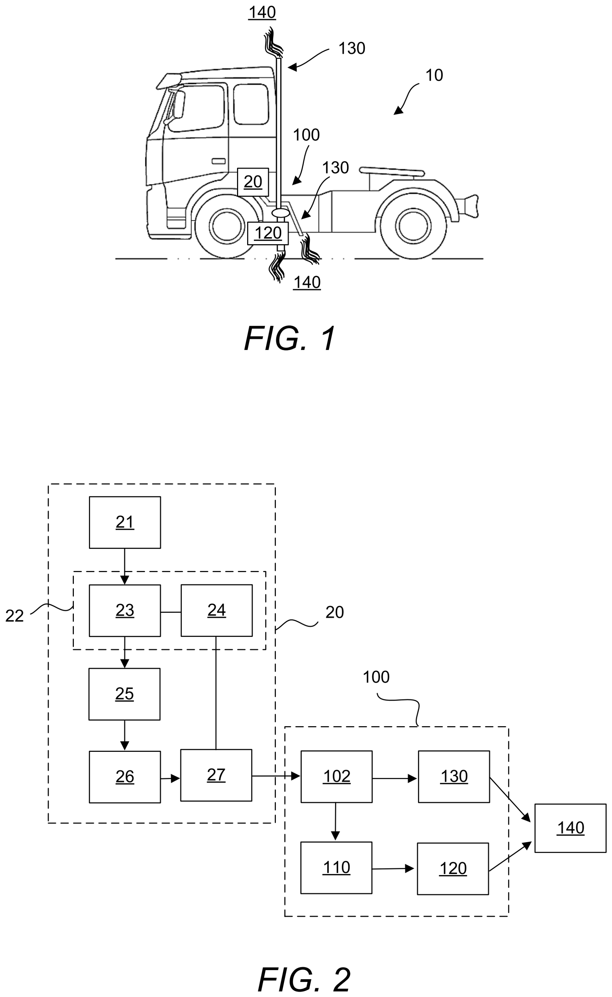

**FIG. 1** is an exemplary schematic illustration of an FCEV **10**. The FCEV **10** is illustrated as a heavy-duty vehicle, and can be realized as trucks, buses, construction equipment, or other vehicle types. The FCEV **10** comprises vehicle units and associated functionality as would be understood and expected by a skilled person, such as a powertrain, chassis, and various control systems.

The FCEV **10** comprises a fuel cell system **20** having a fuel cell stack with a plurality of fuel cells. The fuel cell system **20** is adapted to convert chemical energy stored in a fuel, typically hydrogen, as well as an oxidizing agent, typically oxygen or air, into electricity and heat as a byproduct through continuous electrochemical reactions. The generated electric current is used to power an electric motor for propulsion purposes, charge a vehicle battery, and/or power auxiliary vehicle systems of the FCEV **10.** During the continuous electrochemical reactions, a reduction reaction occurs at the cathode where oxygen is supplied in combination with the protons and electrons from an external circuit. This reduction reaction generates exhaust gases which includes water vapour. Hereinafter, this will be referred to as exhaust fluids, and it shall be understood that the exhaust fluids includes both gas and water. The overall reaction discussed above can be represented according to the following: $2H_2 + O_2 \rightarrow 2H_2O + electricity + heat.$

The present disclosure addresses how to manage these exhaust fluids. For hydrogen as the fuel to be consumed this is determined by the reaction above. Other fuels, such as methanol, ethanol, natural gas, propane, hydrocarbons, etc., involve their respective reactions generating exhaust fluids as a byproduct.

Purely for exemplary purposes, the following exemplary scenario describes how much water vapour that can be generated in an operation of a FCEV. The following assumptions are considered: A standard power rating for a fuel cell stack in a standard-size heavy duty FCEV may be 100 kW, a standard time of operation about one hour, and the fuel to be consumed is hydrogen having an approximate energy content of 286 kJ. The moles of hydrogen consumed may be calculated with the following formula: $\frac{Power*Time}{Energy\ content\ of\ hydrogen} = \frac{100kW*1hour}{286kJ/mol} \approx 0.349 \text{ moles}$ . With these assumptions, the volume of water vapour generated during one hour can be calculated as:

$$Volume\ of\ water\ vapour(liters) = Moles\ of\ hydrogen\ consumed * 22.4\frac{liters}{mol} = 0.349\ moles * 22.4\frac{liters}{mol} = 7.81\ liters.$$

. Therefore, this particular standard-size heavy-duty FCEV with a 100 kW fuel cell stack, operating for one hour, would produce approximately 7.81 liters of water vapour as a byproduct of the electrochemical reactions. Clearly, longer operation times of the FCEV or higher power ratings of the fuel cell stack would result in a higher water vapour production. In addition to the water vapour, gas is generated, for example in the form of heat as discussed above.

The FCEV **10** further comprises an exhaust system **100** for fluids, connected downstream of the fuel cell system **20.** The term "downstream" indicates the exhaust system **100** is positioned after the fuel cell system **20** in the flow path, receiving exhaust fluids from the fuel cell system **20.** This setup allows the exhaust system **100** to channel away fluids in various ways that will be discussed in more detail herein.

The exhaust system **100** comprises a fluid discharge location, typically being an exhaust fluid reservoir **120,** serving as an intermittent and temporary storage container for fluids before expulsion into an external environment **140.** In this context, the "external environment **140"** refers to the ambient atmosphere surrounding the FCEV **10,** where exhaust fluids are expelled away from the interior of the FCEV **10.** The exhaust fluid reservoir **120** allows for controlled release, ensuring that fluids are expelled in a manner that reduces excessive fluid release on driving surfaces and prevents fluid build-up within the exhaust system **100.** The fluids in the exhaust fluid reservoir **120** is typically released at high vehicle speeds of the FCEV **10,** or in workshop settings.

The exhaust system **100** also includes a fluid exhaust chimney **130,** which is a structure designed to release larger amounts of fluids compared to the discharge location. The fluid exhaust chimney **130** is thus different from the fluid discharge location. The fluid exhaust chimney **130** is preferably arranged at a higher point above the FCEV **10.** Typically, this is the highest point of the FCEV **10,** or at least a point that is higher compared to the fuel cell system **20** or the fluid discharge location. This design not only aids in dispersing exhaust gases into the atmosphere more effectively, but also reduces the risk of exhaust fluids freezing on roads, which can occur if fluids are expelled at lower levels such as via the fluid discharge location. The fluid exhaust chimney **130** may accordingly assist in directing exhaust fluids upwards, reducing the chance of road hazards and improving environmental safety. This elevation helps in dispersing gases more widely, preventing localized accumulation and enhancing overall vehicle safety during operation.

As also visualized in **FIG. 1,** the fluid exhaust chimney **130** can in some cases be guiding the fluids through other conduits not necessarily being above the fuel cell system **20,** into the external environment **140.**

In view of the above, it is therefore typically desired to expel as much exhaust fluids as possible via the fluid exhaust chimney **130,** preferably at a high vertical location, as this reduces the risk of road hazards caused by water and ice formation. However, this is not always possible due to limitations in pressure management and fluid dynamics within the exhaust system **100,** which can lead to backpressure and inefficient drainage. These issues may result in fluid accumulation, potentially causing backflow into the fuel cell system **20** and risking damage to sensitive components. Hence, the following disclosure introduces an exhaust fluid drain reducer. This device will now be explained in a system context with further reference to **FIG. 2.**

**FIG. 2** shows components of a fuel cell system **20** and an exhaust system **100** in more detail. The fuel cell system **20** comprises several interconnected components working together to manage air intake, compression, cooling, humidity adjustment, and electrochemical reactions. At the forefront is an air filter **21,** responsible for cleansing incoming air to safeguard a fuel cell stack **27** from impurities. This filtered air is then directed to an electric turbocharger **22,** including a compressor **23** and a turbine **24.** The electric turbocharger **22** is arranged to manage air supply. The compressor **23** pressurizes and compresses the filtered air, enhancing electrochemical reaction efficiency within the fuel cell stack **27.** Simultaneously, the turbine **24,** driven by exhaust gases from the fuel cell stack **27,** recovers energy to drive the compressor **23.** In the process of compression within the electric turbocharger **22,** the air experiences an increase in temperature. When air is compressed, its molecules are forced closer together, resulting in an increase in kinetic energy, which manifests as heat. This phenomenon may be described by Boyle's Law, which states that the pressure of a gas is inversely proportional to its volume when the temperature is held constant. Therefore, as the volume of air decreases during compression, its pressure and temperature increase.

Following compression, the heated compressed air passes through a charge air cooler **25** (often used interchangeably with intercooler in the context of fuel cell systems), where it undergoes cooling. Cooling is important for maintaining desirable operating conditions within the fuel cell stack **27.** This cooling process may involve a dedicated coolant loop circulating through a pump, heat exchanger, and coolant fluid. The coolant absorbs heat from the heated compressed air within the charge air cooler **25.**

Subsequently, the cooled and pressurized air proceeds to a humidifier **26,** which adjusts its moisture content before entering the fuel cell stack **27.** Proper humidity levels are important for efficient operation, particularly for certain types of fuel cells like Solid Oxide Fuel Cells (SOFCs). The humidifier **26** balances the moisture content using water vapor produced by the fuel cell stack **27** and introduced from the air supply system (i.e., the electric turbocharger **22** via the charge air cooler **25).** Consequently, properly humidified air is delivered to the fuel cell stack **27** where the electrochemical reactions discussed above occur, converting fuel and oxidant into electricity and exhaust fluids including gas and water.

Downstream the fuel cell system **20,** more specifically the fuel cell stack **27,** is the exhaust system **100.** The exhaust system **100** serves the purpose of managing and expelling exhaust fluids generated by the fuel cell system **20,** more specifically the fuel cell stack **27** as a consequence of the reactions discussed above. Positioned "downstream" of the fuel cell system **20** means that the exhaust system **100** is situated in the flow path where fluids travel after leaving the fuel cell stack **27** before exiting the overall system, such as in the FCEV **10.**

The exhaust system **100** comprises main exhaust piping **102,** which includes one or more central conduits for expelling exhaust fluids from the fuel cell system **20.** The main exhaust piping **102** is designed to accommodate varying configurations and materials, depending on the specific vehicle requirements and environmental conditions. The design of the main exhaust piping **102** can vary, reflecting differences in for example vehicle architecture and intended operational environments.

As discussed above, the exhaust system **100** includes several components for fluid expulsion into the external environment **140,** being the fluid exhaust chimney **130,** or another discharge location such as the exhaust fluid reservoir **120.** As indicated in the schematic, the main exhaust piping **102** connects directly to the fluid exhaust chimney **130,** and indirectly to the fluid reservoir **120** via an exhaust fluid drain reducer **110,** before expelling fluids into the external environment **140.**

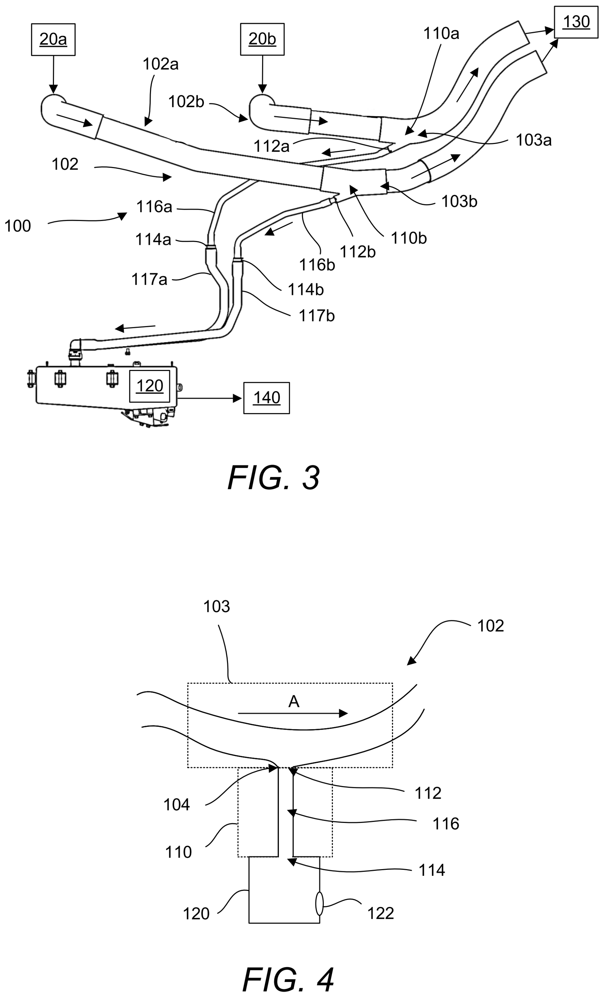

**FIG. 3** shows the exhaust fluid drain reducer **110** arranged in an exhaust system **100.** This particular exhaust system **100** is for two fuel cell systems **20a, 20b,** although it shall be understood that it can be used for one or more fuel cell systems **20.** Moreover, a single fluid exhaust chimney **130** and a single exhaust fluid reservoir **120** is employed, although any number may be suitable in various examples. The flow direction in the exhaust system **100** is indicated by way of arrows. Since this exhaust system **100** includes two fuel cell systems **20a, 20b,** respective main piping conduits **102a, 102b** extend from the fuel cell systems **20a, 20b,** to respective junctions where exhaust fluid drain reducers **110a, 110b** are arranged. Other systems may include any suitable number of exhaust fluid drain reducers **110.**

The exhaust fluid drain reducers **110a, 110b,** more specifically exhaust fluid inlets **112a, 112b** thereof, are in fluid communication with the main piping conduits **102a, 102b,** the fluid exhaust chimney **130,** and the discharge location, in this example being an exhaust fluid reservoir **120.** This means that the exhaust fluid drain reducer **110** is connected in a way that allows the continuous flow of exhaust fluids between these components. The exhaust fluid drain reducer **110** includes piping arranged together with the main piping exhaust piping **102.**

In addition to the exhaust fluid inlets **112a, 112b,** each exhaust fluid drain reducer **110a, 110b** comprises an exhaust fluid conduit **116a, 116b** fluidly linking the exhaust fluid inlet **112a, 112b** with a respective exhaust fluid outlet **114a, 114b.**

In this example, the exhaust fluid outlets **114a, 114b** connect to respective second conduits **117a, 117b.** This allows fluids to travel from the main piping conduits **102a, 102b,** via the exhaust fluid inlets **112a, 112b,** through the exhaust fluid exhaust fluid conduit **116a, 116b,** via the exhaust fluid outlets **114a, 114b,** through the second conduits **117a, 117b,** to the exhaust fluid reservoir **120.** In other examples the exhaust fluid outlets **114a, 114b** may connect directly to the exhaust fluid reservoir **120** without the use of second conduits **117a, 117b.**

The exhaust fluid drain reducers **110a, 110b** are designed with a narrower diameter compared to the main piping conduits **102a, 102b.** This design leverages fluid dynamics principles to achieve desired performance. According to Bernoulli's Principle, lower diameter in the exhaust fluid drain reducers **110a, 110b** increases the velocity of fluids in the main piping conduits **102a, 102b,** which decreases static pressure within the exhaust system **100.** This lower pressure facilitates the increased movement of fluids through the fluid exhaust chimney **130,** effectively reducing road drainage and reducing the risk of ice formation (where the fluid exhaust chimney **130** is associated with a high vertical position as discussed herein). The Venturi Effect further enhances this process by creating a low-pressure zone within a constricted area where the exhaust fluid drain reducers **110a, 110b** are arranged. This low pressure draws fluids into the main piping conduits **102a, 102b,** ensuring it travels towards the fluid exhaust chimney **130.** This movement not only prevents backflow into the fuel cell system **20** but also effectively drains the main piping conduits **102a, 102b.**

Therefore, a narrower inner diameter in the exhaust fluid drain reducer **110** enhances system efficiency, and generally the narrower the more desired. However, there is still a balance to take into account between adequate drainage (via the exhaust fluid drain reducer **110)** and effective fluid expulsion (via the fluid exhaust chimney **130).** Preferably, the inner diameter of the exhaust fluid drain reducer **110** is at least five times smaller than that of the main exhaust piping **102.** In a particular example, the exhaust fluid drain reducer **110** has an inner diameter of 10-12 mm and the main exhaust piping measures 76 mm, making it approximately 6-7 times larger.

The length of the exhaust fluid drain reducers **110a, 110b,** and more specifically the length of the exhaust fluid conduits **116a, 116b** may also be of relevance. The length should be long enough to allow the necessary pressure dynamics to occur, ensuring efficient fluid movement into the main exhaust stream. The longer the main piping conduit **102a, 102b,** the longer the exhaust fluid drain reducers **110a, 110b** should be, to maintain desirable pressure management and flow dynamics.

As seen in the illustration, the exhaust fluid drain reducers **110a, 110b** are arranged at respective lower main exhaust piping portions **103a, 103b.** This means that the exhaust fluid drain reducers **110a, 110b** are positioned in a segment of main piping conduits **102a, 102b** that is closest to the ground or the lowest vertical area in the horizontal plane of the piping layout. Specifically, the lower main exhaust piping portions **103a, 103b** are located at an area where gravity causes exhaust fluids to naturally accumulate, such as at the bottommost curve or horizontal run of the main piping conduits **102a, 102b.**

This positioning offers several advantages, especially in combination with the narrower inner diameter construction discussed above. Firstly, it effectively captures and drains accumulated fluids, preventing backflow into the fuel cell system **20,** which could otherwise lead to damage and reduced efficiency. Secondly, positioning also utilizes gravity to enhance fluid removal. By reducing fluid buildup, the positioning can reduce the risk of corrosion and blockages, thereby maintaining desirable exhaust flow. Thirdly, this positioning limits the obstructions in the main exhaust flow of the main piping conduits **102a, 102b,** which in turn may prevent temperature drops that could lead to condensation. Condensation is undesired because it can lead to blockages and corrosion within the exhaust system **100,** reducing efficiency and potentially damaging components.

In **FIG. 4,** the exhaust fluid drain reducer **110** is depicted in greater detail, showing its connection to the lower main exhaust piping portion **103** of the main exhaust piping **102.** The longitudinal axis **A** refers to the central line running along the length of the lower main exhaust piping portion **103,** guiding the flow direction of fluids. The length of the lower main exhaust piping portion **103** along axis **A** can vary based on piping properties such as material type, thickness, and flexibility, as well as the specific curvature and diameter required for desired flow dynamics.

The exhaust fluid drain reducer **110** includes an exhaust fluid inlet **112,** an exhaust fluid outlet **114,** and an exhaust fluid conduit **116** linking the exhaust fluid inlet **112** with the exhaust fluid outlet **114** by fluid connection. The exhaust fluid inlet **112** is arranged in fluid communication with the main exhaust piping **102,** and the exhaust fluid outlet **114** in fluid communication with the fluid discharge location, in this example being the exhaust fluid reservoir **120.**

In this configuration, the longitudinal axis **A** of the lower main exhaust piping portion **103** intersects with the exhaust fluid drain reducer **110** at a T-junction, specifically at the exhaust fluid inlet **112.** This T-junction design can allow for efficient fluid diversion by providing a direct path for purposes of draining the main exhaust piping **102.** The T-junction shape may facilitate the separation of fluids from the main exhaust piping **102** without causing disruption to the flow. By positioning the exhaust fluid inlet **112** generally perpendicularly to the main exhaust piping **102,** the exhaust fluid drain reducer **110** can capture fluids using gravitational force. It shall be noted that the T-junction is approximately T-shaped, meaning it does not need to form a 90-degree angle. Instead, it allows for variations in angles and configurations that still achieve the goal of effectively diverting fluids from the main exhaust piping **102** into the exhaust fluid drain reducer **102,** ensuring flexibility in design while maintaining functionality.

The exhaust fluid reservoir **120** includes an overflow valve **122** for controlling pressure, thus connecting the exhaust fluid drain reducer **110** to atmospheric pressure through said overflow valve **122,** enabling atmospheric ventilation. This creates a lower pressure at the exhaust fluid inlet **112,** thus further contributing to the movement of fluids through the fluid exhaust chimney **130,** with lower amount of fluid entering the exhaust fluid drain reducer **110** and flowing into the exhaust fluid reservoir **120.**

As discussed above, the exhaust fluid drain reducer **110** may be arranged at a lower main exhaust piping portion **103.** This may be realized by the lower main exhaust piping portion **103** including a lowest vertical position **104** of the main exhaust piping **102.** Here, the exhaust fluid inlet **112** is arranged at a predetermined distance from said lowest vertical position **104,** enhancing drainage efficiency and further preventing backflow. This can offer flexibility in design as it is the location of the exhaust fluid inlet **112** in relation to the lowest vertical position **104** that is the determining factor of where to arrange the exhaust fluid drain reducer **110.**

The predetermined distance may vary depending on for example piping configurations and area of application. The predetermined distance may be than 5% of the total length of the main exhaust piping **102.** This precise placement can ensure that the exhaust fluid drain reducer **110** effectively captures fluids without obstructing the main flow of fluids. Keeping the distance as low as possible can improve gravitational assistance in fluid removal, reducing the risk of fluid accumulation, corrosion, and blockages.

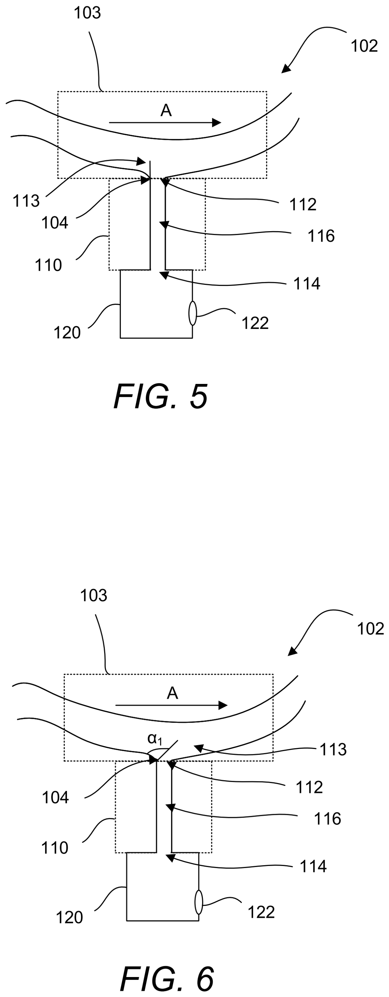

**FIG. 5** is another exemplary exhaust fluid drain reducer **110.** This example may include the details discussed above with reference to **FIG. 4,** and further incorporates a lateral extension **113** inside the main exhaust piping **102.** The lateral extension **113** is a protrusion or additional section of the exhaust fluid inlet **112** extending sideways into the main exhaust piping **102.** "Lateral" in these contexts means extending in a direction different from the flow direction, while "extension" indicates an added part. This lateral extension **113** can take various shapes, such as a tube or conduit, that projects into the main exhaust piping **102.** The purpose of the lateral extension **113** is to capture and direct fluids into the exhaust fluid drain reducer **110,** further preventing backflow of fluids into the fuel cell system **20.**

**FIG. 6** is another exemplary exhaust fluid drain reducer **110.** This example may include the details discussed above with reference to **FIG. 5,** with the addition that the lateral extension **113** is tilted by a tilt angle $\alpha_1$ towards the longitudinal axis **A.** This tilt is useful because it can align the lateral extension **113** more closely with the direction of the fluid flow, enhancing the capture of fluids into the exhaust fluid drain reducer **110,** further preventing backflow of fluids into the fuel cell system **20.** The angled orientation may also reduce turbulence and resistance since it can reduce the risk of drained fluids re-entering the main exhaust piping **102.** Moreover, the tilt can further prevent backflow of fluids.

The tilt angle $\alpha_1$ may be at least 160 degrees, preferably 170 degrees, and most advantageously between 176 and 177 degrees. Experiments conducted by the inventors showed that as the tilt angle approaches 176-177 degrees, the extension aligns more closely with the main exhaust flow at the lower main exhaust piping portion **103,** enhancing fluid capture efficiency. This alignment which is near parallel with the axis **A** can reduce turbulence and backflow, ensuring smoother and more effective fluid movement into the exhaust fluid drain reducer **110,** thereby improving the overall performance of the exhaust system **100.**

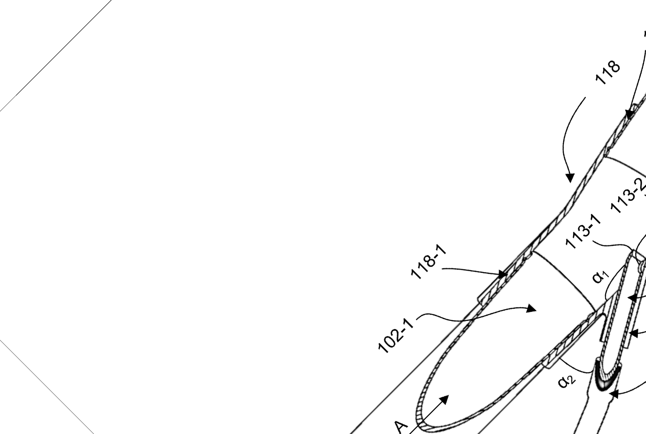

**FIG. 7** is another exemplary exhaust fluid drain reducer **110,** incorporating several advantageous examples of **FIGs. 4-6** and adds yet advantageous features. In the examples of **FIGs. 4-6** the lateral extension **113** included one side edge towards the fuel cell system **20** rather than towards the fluid exhaust chimney **130** (or an upper edge where the lateral extension **113** was tilted). Here, the lateral extension **113** includes not only an upper edge **113-1,** but also a lower edge **113-2.**

The upper edge **113-1** is beveled. The upper beveled edge **113-1** is an edge that has been shaped or cut at an angle other than 90 degrees, creating a sloping surface. This sloped transition contrasts with a square edge, where the two faces meet perpendicularly. The upper beveled edge **113-1** reduces the sharpness of the lateral extension **113.** This design smoothens the transition of fluids entering the lateral extension **113,** contrasting with a square edge that can create abrupt changes in flow direction. By reducing sharpness, the upper beveled edge **113-1** allows fluids to flow more seamlessly, reducing eddies and vortices that typically cause turbulence. Overall fluid dynamics can thereby be improved.

In addition, the peak or "nose tip" of the upper beveled edge **113-1** assists in creating a pressure differential within the exhaust system **100**. As fluids flow over the upper beveled edge **113-1,** the design facilitates a smoother transition, reducing static pressure at this point. This pressure differential aids in equalizing the internal pressure of the exhaust system **100** with atmospheric pressure. By doing so, it effectively channels the majority of the water towards the fluid exhaust chimney **130**. This movement may harness the reduced pressure to overcome gravitational forces, ensuring efficient expulsion of fluids and reducing the risk of accumulation or backflow.

The angle of the bevel may vary, for instance 30°, 45°, or 60°, depending e.g. fluid velocity, piping configurations, power throughput mode of the area of application, or the like. The upper beveled edge **113-1** can either terminate in a sharp line or be rounded off to further reduce sharpness. The upper beveled edge **113-1** may include a single-sided bevel featuring a slope on one side of the upper beveled edge **113-1**. The upper beveled edge **113-1** may include a double-sided bevel-often referred to as a chamfer-creating a symmetrical, V-shaped profile.

The lower edge **113-2** is grooved. The lower grooved edge **113-2** may include a series of linear indentations or channels cut into the surface. Unlike a smooth or flat edge, the grooved design provides pathways that help guide the fluid flow more precisely. These grooves can assist in channeling the fluids efficiently, reducing the likelihood of fluid scatter and enhancing directional flow. By providing a lower grooved edge **113-2,** turbulence can therefore be reduced, and a more controlled fluid transition into the lateral extension **113** can be obtained, improving overall fluid dynamics.

The depth and spacing of the lower grooved edge **113-2** may vary, for instance, shallow or deep, narrow or wide, depending on factors such as fluid viscosity, pressure, and specific application requirements. The grooved edge **113-2** can be designed with parallel grooves for uniform flow or patterned variations to manage specific flow conditions. Additionally, the grooves can be angled to further influence flow direction or create a vortex effect if needed. The versatility in groove design allows for customization based on operational requirements.

In some examples, the lower grooved edge **113-2** forms a cavity **113-3** between the lateral extension **113** and an inner surface of the main exhaust piping **102**. This cavity **113-3** may act as a collection area for fluids, allowing them to settle and be directed smoothly into the lateral extension **113**. By creating this space, the cavity **113-3** can aid in reducing turbulence and promote a more organized flow pattern. The cavity **113-3** may also serve as a buffer zone, which can help in managing variations in fluid pressure and velocity.

The exhaust fluid drain reducer **110** further comprises a connector framework **118**. The connector framework **118** secures the exhaust fluid drain reducer **110** in place within the exhaust system **100**. The connector framework **118** comprises a first connector element **118-1** attached to a first section **102-1** of the main exhaust piping **102** and a second connector element **118-2** attached to the second section **102-2** of the main exhaust piping **102**. The connector elements **118-1, 118-2** may include bolts, screws, adhesives, or other suitable fasteners. The connector framework **118** also includes an opening portion **118-3** extending downward relative to the longitudinal axis **A.** The opening portion **118-3** allows the exhaust fluid inlet **112** to be appropriately positioned for fluid capture and drainage.

A second tilt angle $\alpha_2$ is also shown in **FIG. 7,** between the exhaust fluid conduit **116** and the main exhaust piping **102**. The second tilt angle $\alpha_2$ refers to the angle at which the exhaust fluid conduit **116** is oriented relative to the longitudinal axis **A.** This angle complements the first tilt angle $\alpha_1$, by further aligning the exhaust fluid conduit **116** with the natural flow of fluids, which may further enhance fluid capture and reducing turbulence. The second tilt angle $\alpha_2$ may be selected based on the value of the first tilt angle, $\alpha_1$. For example, if the longitudinal axis **A** is approximately parallel with a horizontal plane, the second tilt angle $\alpha_2$ could be approximately $180 - \alpha_1$.

The connector framework **118** may be made of a material comprising silicone, a material choice that offers flexibility, durability, and resistance to high temperatures typically prevalent in an exhaust system **100** for a fuel cell system **20.**

In some examples, a portion of the main exhaust piping **102** may be designed with an inner diameter smaller than other sections of the main exhaust piping **102,** either preceding (i.e., before) or succeeding (i.e., after) the arrangement of the exhaust fluid inlet **112** in the flow direction of the exhaust system **100**. This design can offer flexibility, allowing the main exhaust piping **102** to be adapted in conjunction with the arrangement of the exhaust fluid drain reducer **110,** for example based on a type of exhaust system and specific spatial constraints. By reducing the cross-section near the exhaust fluid drain reducer **110,** either before and/or after its placement, the speed of the exhaust fluids can be increased, enhancing the pressure differential needed to increase fluid movement towards the fluid exhaust chimney **130.**

While the main exhaust piping **102** in **FIG. 7** is generally shown as having a consistent diameter, it can be tapered to meet design requirements. Tests conducted by the inventors have indicated that the inner diameter may be reduced by between approximately 15% to 33% if the total system pressure allows this. This tapering increases the flow speed near the exhaust fluid drain reducer **110,** making the exhaust system **100** more efficient. Additionally, the narrower exhaust fluid drain reducer **110** should preferably be several decimeters long to effectively reduce static pressure, further facilitating fluid movement and improving performance.

The tapering described can also be applied to the connector framework **118,** either as an alternative or in addition to the main exhaust piping **102.** By reducing the diameter of the connector framework **118,** the flow speed of the exhaust fluids can be increased. This increase in speed may further enhance the pressure differential such that fluids can more efficiently be directed towards the fluid exhaust chimney **130.** Tapering the connector framework **118** may provides another layer of flexibility in the design.

In further examples of the disclosure the following is provided.

Example 1: An exhaust fluid drain reducer (110) for an exhaust system (100) arranged downstream of a fuel cell system (20), wherein the exhaust fluid drain reducer (110) comprises an exhaust fluid inlet (112) arranged in fluid communication with the main exhaust piping (102) of the exhaust system (100). The main exhaust piping (102) fluidly connects a fuel cell stack (27) of the fuel cell system (20) and a fluid exhaust chimney (130). An exhaust fluid outlet (114) is arranged in fluid communication with a fluid discharge location, and an exhaust fluid conduit (116) fluidly connects the exhaust fluid inlet (112) and the exhaust fluid outlet (114), wherein the exhaust fluid conduit (116) is constructed with an inner diameter smaller than that of the main exhaust piping (102).

Example 2: The exhaust fluid drain reducer (110) of Example 1, wherein the exhaust fluid drain reducer (110) is arranged at a lower main exhaust piping portion (103).

Example 3: The exhaust fluid drain reducer (110) of Example 2, wherein the lower main exhaust piping portion (103) includes a lowest vertical position (104) of the main exhaust piping (102), the exhaust fluid inlet (112) being arranged at a predetermined distance from said lowest vertical position (104).

Example 4: The exhaust fluid drain reducer (110) of any of Examples 1-3, wherein the predetermined distance is less than 5% of the total length of the main exhaust piping (102).

Example 5: The exhaust fluid drain reducer (110) of any of Examples 1-4, wherein a longitudinal axis (A) of the main exhaust piping (102) and the exhaust fluid drain reducer (110) form a T-junction at the exhaust fluid inlet (112).

Example 6: The exhaust fluid drain reducer (110) of Example 5, wherein the exhaust fluid inlet (112) comprises a lateral extension (113) inside the main exhaust piping (102).

Example 7: The exhaust fluid drain reducer (110) of Example 6, wherein the lateral extension (113) is tilted by a tilt angle (á1) towards the longitudinal axis (A) of the main exhaust piping (102).

Example 8: The exhaust fluid drain reducer (110) of Example 7, wherein the tilt angle (á1) is at least 160 degrees, more preferably 170 degrees, most preferably between 176 and 177 degrees.

Example 9: The exhaust fluid drain reducer (110) of any of Examples 6-8, wherein the lateral extension (113) comprises an upper beveled edge (113-1).

Example 10: The exhaust fluid drain reducer (110) of any of Examples 6-9, wherein the lateral extension (113) comprises a lower grooved edge (113-2).

Example 11: The exhaust fluid drain reducer (110) of Example 10, wherein the lower grooved edge (113-2) forms a cavity (113-3) between the lateral extension (113) and an inner surface of the main exhaust piping (102).

Example 12: The exhaust fluid drain reducer (110) of any of Examples 1-11, further comprising a connector framework (118) comprising a first connector element (118-1) affixed to a first main exhaust piping portion (102-1); a second connector element (118-2) affixed to a second main exhaust piping portion (102-2); and an opening portion (118-3) protruding downwards in relation to a longitudinal axis (A) of the main exhaust piping (102), wherein the exhaust fluid inlet (112) is received at the opening portion (118-3).

Example 13: The exhaust fluid drain reducer (110) of Example 12, wherein the connector framework (118) is made of a material comprising silicone.

Example 14: The exhaust fluid drain reducer (110) of any of Examples 1-13, wherein a portion of the main exhaust piping (102) preceding and/or succeeding the arrangement of the exhaust fluid inlet (112) in a flow direction of the exhaust system (100) is constructed with an inner diameter smaller than that of other portions of the main exhaust piping (102).

Example 15: The exhaust fluid drain reducer (110) of any of Examples 1-14, wherein the fluid discharge location is arranged vertically below the exhaust fluid drain reducer (110).

Example 16: The exhaust fluid drain reducer (110) of any of Examples 1-15, wherein the fluid discharge location is an exhaust fluid reservoir (120).

Example 17: The exhaust fluid drain reducer (110) of Example 16, wherein the exhaust fluid reservoir (120) comprises an overflow valve (122) enabling atmospheric ventilation for the exhaust fluid drain reducer (110).

Example 18: The exhaust fluid drain reducer (100) of any of Examples 1-17, wherein the exhaust fluid outlet (114) connects to a second conduit (117) via which the exhaust fluid drain reducer (100) connects to said fluid discharge location.

Example 19: The exhaust fluid drain reducer (110) of any of Examples 1-18, wherein the exhaust fluid conduit (116) is constructed with an inner diameter being at least five times shorter than that of the main exhaust piping (102).

Example 20: The exhaust fluid drain reducer (110) of any of Examples 1-19, comprising piping.

Example 21: A fuel cell electric vehicle (10) comprising a fuel cell system (20); and an exhaust system (100) arranged downstream of the fuel cell system (20) and comprising the exhaust fluid drain reducer (110) of any of Examples 1-20.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1.  An exhaust fluid drain reducer (110) for an exhaust system (100) arranged downstream a fuel cell system (20), wherein the exhaust fluid drain reducer (110) comprises:

    an exhaust fluid inlet (112) arranged in fluid communication with main exhaust piping (102) of the exhaust system (100), the main exhaust piping (102) fluidly connecting a fuel cell stack (27) of the fuel cell system (20) and a fluid exhaust chimney (130);
    an exhaust fluid outlet (114) arranged in fluid communication with a fluid discharge location; and
    an exhaust fluid conduit (116) fluidly connecting the exhaust fluid inlet (112) and the exhaust fluid outlet (114), wherein the exhaust fluid conduit (116) is constructed with an inner diameter smaller than that of the main exhaust piping (102).

2.  The exhaust fluid drain reducer (110) of claim 1, wherein the exhaust fluid drain reducer (110) is arranged at a lower main exhaust piping portion (103).

3.  The exhaust fluid drain reducer (110) of claim 2, wherein the lower main exhaust piping portion (103) includes a lowest vertical position (104) of the main exhaust piping (102), the exhaust fluid inlet (112) being arranged at a predetermined distance from said lowest vertical position (104).

4.  The exhaust fluid drain reducer (110) of any of claims 1-3, wherein a longitudinal axis (A) of the main exhaust piping (102) and the exhaust fluid drain reducer (110) form a T-junction at the exhaust fluid inlet (112).

5.  The exhaust fluid drain reducer (110) of any of claims 1-4, wherein the exhaust fluid inlet (112) comprises a lateral extension (113) inside the main exhaust piping (102).

6.  The exhaust fluid drain reducer (110) of claim 5, wherein the lateral extension (113) is tilted by a tilt angle ($\alpha_1$) towards the longitudinal axis (A) of the main exhaust piping (102).

**7.** The exhaust fluid drain reducer (110) of any of claims 5-6, wherein the lateral extension (113) comprises an upper beveled edge (113-1).

**8.** The exhaust fluid drain reducer (110) of any of claims 5-7, wherein the lateral extension (113) comprises a lower grooved edge (113-2).

**9.** The exhaust fluid drain reducer (110) of claim 8, wherein the lower grooved edge (113-2) forms a cavity (113-3) between the lateral extension (113) and an inner surface of the main exhaust piping (102).

**10.** The exhaust fluid drain reducer (110) of any of claims 1-9, further comprising a connector framework (118) comprising:

a first connector element (118-1) affixed to a first main exhaust piping portion (102-1);
a second connector element (118-2) affixed to a second main exhaust piping portion (102-2); and
an opening portion (118-3) protruding downwards in relation to a longitudinal axis (A) of the main exhaust piping (102), wherein the exhaust fluid inlet (112) is received at the opening portion (118-3).

**11.** The exhaust fluid drain reducer (110) of any of claims 1-10, wherein a portion of the main exhaust piping (102) preceding and/or succeeding the arrangement of the exhaust fluid inlet (112) in a flow direction of the exhaust system (100) is constructed with an inner diameter smaller than that of other portions of the main exhaust piping (102).

**12.** The exhaust fluid drain reducer (110) of any of claims 1-11, wherein the fluid discharge location is arranged vertically below the exhaust fluid drain reducer (110).

**13.** The exhaust fluid drain reducer (110) of any of claims 1-12, wherein the fluid discharge location is an exhaust fluid reservoir (120) comprising an overflow valve (122) enabling atmospheric ventilation for the exhaust fluid drain reducer (110).

**14.** The exhaust fluid drain reducer (100) of any of claims 1-13, wherein the exhaust fluid outlet (114) connects to a second conduit (117) via which the exhaust fluid drain reducer (100) connects to said fluid discharge location.

**15.** A fuel cell electric vehicle (10) comprising:

a fuel cell system (20); and
an exhaust system (100) arranged downstream the fuel cell system (20) and comprising the exhaust fluid drain reducer (110) of any of claims 1-14.

*FIG. 1*

*FIG. 2*

**FIG. 3**

**FIG. 4**

*FIG. 5*

*FIG. 6*

# EUROPEAN SEARCH REPORT

**Application Number**

EP 25 21 6610

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 708 411 A1 (YANMAR HOLDINGS CO LTD [JP]) 11 March 2026 (2026-03-11)<br>* paragraphs [0082] - [0091], [0121]; figures 6b, 7, 8 *<br>----- | 1-4,<br>10-12,14 | INV.<br>H01M8/04291<br>B60K13/04<br>H01M8/04119<br>B60L50/72 |
| X | WO 2023/186699 A1 (JAGUAR LAND ROVER LTD [GB]) 5 October 2023 (2023-10-05)<br>* pages 2, 8, 9,, lines 1-10, 8-22, 30-32 - pages 12, 15; figures 1, 2, 4, 6 *<br>----- | 1-9,11,<br>12,15 | |
| X | EP 4 280 321 A2 (PUREM GMBH [DE]) 22 November 2023 (2023-11-22)<br>* paragraphs [0020], [0031], [0034], [0036] - [0037]; figures 2, 4 *<br>----- | 1-4,<br>11-13,15 | |
| A | DE 10 2016 013666 A1 (DAIMLER AG [DE]) 17 May 2018 (2018-05-17)<br>* the whole document *<br>----- | 1-15 | |

**TECHNICAL FIELDS SEARCHED (IPC)**

H01M
B60K

The present search report has been drawn up for all claims

| Place of search | Date of completion of the search | Examiner |
|---|---|---|
| The Hague | 23 April 2026 | Seidel, Philipp |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 6610

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2026

| Patent document cited in search report | Publication date | Patent family member(s) | Publication date |
|---|---|---|---|
| EP 4708411 A1 | 11-03-2026 | CN 121642049 A | 10-03-2026 |
| | | EP 4708411 A1 | 11-03-2026 |
| | | JP 2026044566 A | 12-03-2026 |
| | | KR 20260032288 A | 09-03-2026 |
| | | US 20260066314 A1 | 05-03-2026 |
| WO 2023186699 A1 | 05-10-2023 | GB 2617313 A | 11-10-2023 |
| | | WO 2023186699 A1 | 05-10-2023 |
| EP 4280321 A2 | 22-11-2023 | CN 117096401 A | 21-11-2023 |
| | | DE 102022112683 A1 | 23-11-2023 |
| | | EP 4280321 A2 | 22-11-2023 |
| | | JP 7662705 B2 | 15-04-2025 |
| | | JP 2023171352 A | 01-12-2023 |
| | | KR 20230162554 A | 28-11-2023 |
| | | US 2023378500 A1 | 23-11-2023 |
| DE 102016013666 A1 | 17-05-2018 | NONE | |

For more details about this annex : see Official Journal of the European Patent Office, No. 12/82